# EUROPÄISCHE PATENTSCHRIFT

(11) **EP 1 355 972 B1**
(45) Veröffentlichungstag und Bekanntmachung des Hinweises auf die Patenterteilung: **04.08.2004**
(21) Anmeldenummer: 01986408.1
(22) Anmeldetag: 13.12.2001
(51) Int. Cl.: C08G 77/442, C09D 183/10, C08G 77/52, C08G 77/38

(54) **THERMOPLASTISCHE SILICONBLOCKCOPOLYMERE, DEREN HERSTELLUNG UND VERWENDUNG**
THERMOPLASTIC SILICON BLOCK COPOLYMERS, THE PRODUCTION THEREOF AND THE USE OF THE SAME
COPOLYMERES THERMOPLASTIQUES GREFFES PAR SILICONE, LEUR PRODUCTION ET LEUR UTILISATION

(30) Priorität: 21.12.2000 DE 10064092; 21.12.2000 DE 10064074
(43) Veröffentlichungstag der Anmeldung: 29.10.2003
(73) Patentinhaber: Wacker-Chemie GmbH, 81737 München (DE)
(72) Erfinder: LAUTENSCHLAGER, Hans, 84533 Haiming (DE); DAUTH, Jochen, 84489 Burghausen (DE); KELLER, Wolfgang, 84561 Mehring (DE); MAYER, Theo, 84387 Julbach (DE); STARK, Kurt, 84508 Burgkirchen (CH)
(74) Vertreter: Deffner-Lehner, Maria, Dr.
(86) Internationale Anmeldenummer: PCT/EP2001/014708
(87) Internationale Veröffentlichungsnummer: WO 2002/050167

(56) Entgegenhaltungen:
- EP-A- 0 541 103
- EP-B- 0 653 447
- WO-A-91/15538
- WO-A-95/00577
- WO-A-98/38240
- US-A- 5 086 141
- US-A- 5 229 179

## Beschreibung

Die Erfindung betrifft thermoplastische Siliconblockcopolymere, deren Herstellung und Verwendung.

Für die Herstellung von abhäsiven Beschichtungen werden härtbare Polyorganosiloxane auf Trägermaterialien aufgebracht und anschließend unter Zufuhr thermischer Energie oder durch Strahlung.gehärtet.
Die Härtung des Beschichtungsmaterials ist häufig der geschwindigkeitsbestimmende Schritt bei der Herstellung von abhäsiven Trägermaterialien. Zusätzlich ist die Installation von Trockenöfen, UV- oder IR-Lampen notwendig. Deren Betrieb ist außerdem energieintensiv.
Daher sind neuere Entwicklungen darauf ausgerichtet, Beschichtungsmaterialien zur Verfügung zustellen, die auf diesen Härtungsschritt verzichten können.

EP-A 168 624 bzw. die korrespondierende US-A 4,673,611 beschreiben die Coextrusion von PP-Trägerfolien mit einer klebstoffabweisenden Schicht, welche Polydimethylsiloxan enthält.

EP-A 541 103 beschreibt laminierte PET-Filme durch Aufbringen von Emulsionen von Polysiloxan-polyvinyl-Graftpolymeren.

EP-A 254 050 beschreibt die Herstellung eines Releaseliners durch Aufextrudieren eines Gemisches aus Polymer und Siliconharz.

US-A 5,700,571 beschreibt Releasefilme hergestellt durch Coextrusion mit organischen Releasematerailien.

US-A 5,086,141 beschreibt ein vernetztes Polysiloxan-Styrene/Butadiene-Copolymer.

WO 96/39459 beschreibt Blockcopolymere aus Ethylen und cyclischen Siloxan-Monomeren, welche sich in der Coextrusion für Releaseliners einsetzen lassen. In Abmischung mit HDPE lassen sich Releaseliners mit guten abhäsiven Eigenschaften erzielen.

WO 95/00578 beschreibt durch Coextrusion hergestellte Copolymere aus monofunktionellen Siliconen und Polyolefinen, welche als Releasematerial verwendet werden können.

WO 91/15538 beschreibt Releasefilme aus einem Basispolymer und einem Siliconcopolymer. Dieses Copolymer wird dem Basispolymer als Additiv zugesetzt.

Die bisher eingesetzten Produkte zeigen jedoch häufig unbefriedigende abhäsive Eigenschaften, Migration aus der Releaseschicht, geringe Substrathaftung oder schlechte synthetische Zugänglichkeit.

Es bestand daher die Aufgabe, thermoplastische Siliconblockcopolymere bereitzustellen, die zur Herstellung von abhäsiven Überzügen geeignet sind und mit denen die vorstehend genannten Nachteile vermieden werden.

Gegenstand der Erfindung sind thermoplastische Siliconblockcopolymere enthaltend
(A) eine Hartsegment-Polymerkomponente ausgewählt aus der Gruppe bestehend aus Polystyrol, Polymethylmethacrylat, Polybutylacrylat, Polyacrylnitril, Vinylcopolymere und Mischpolymere dieser Polymere, und
(B) eine Weichsegment-Polymerkomponente der allgemeinen Formel

   G-[(SiR₂O)ₘSiR₂-X-]ₙ(SiR₂O)ₘSiR₂-G (I),
wobei R gleich oder verschieden sein kann und einen einwertigen gegebenenfalls halogenierten Kohlenwasserstoffrest mit 1 bis 18 Kohlenstoffatom(en) je Rest bedeutet,
X ein zweiwertiger Rest ausgewählt aus der Gruppe bestehend aus den Resten der Formel 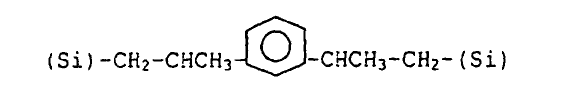 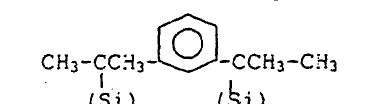 und 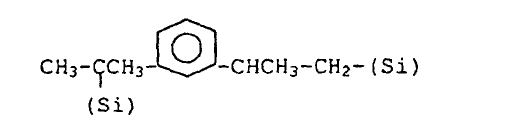 ist,
G gleich oder verschieden sein kann und einen Rest (A)-2-(Si) oder Z'-(Si) bedeutet,
wobei Z ein zweiwertiger Rest ausgewählt aus der Gruppe bestehend aus Resten der Formel 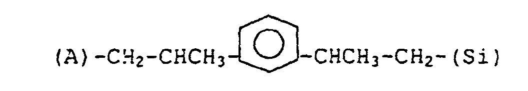 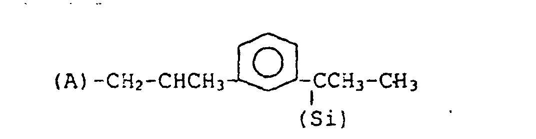 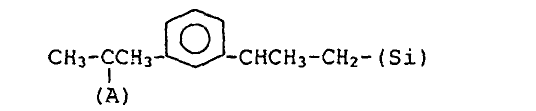 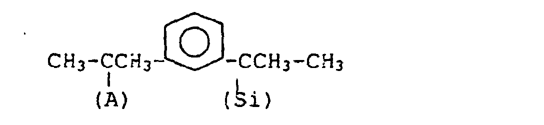 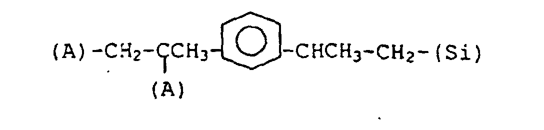 und 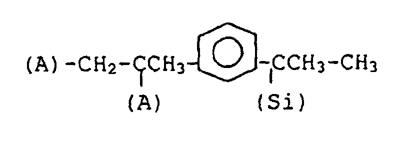 ist und Z' ein einwertiger Rest der Formel 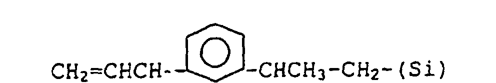 und/oder 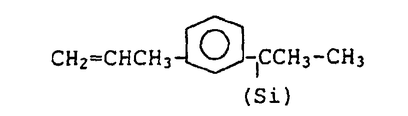 ist,
wobei (A)- eine Bindung zur Hartsegment-Polymerkomponente (A) und (Si)- eine Bindung zum Siliciumatom in (B) bedeutet,
mit der Maßgabe, dass in der Formel (I) höchstens ein Rest G ein Rest Z'- sein kann,
m eine ganze Zahl von 1 bis 1000, vorzugsweise 1 bis 500, ist und
n 0 oder eine ganze Zahl von 1 bis 20 ist,
mit der Maßgabe, dass wenn n nicht 0 ist für das Produkt aus n und m gilt: 4≤n·m≤1000.

Die beiden Komponenten des erfindungsgemäßen Siliconblockcopolymers sind ein nicht-polares Weichsegment (B) und ein polares Hartsegment (A). Der nicht-polare weiche Block ist ein durch organische Gruppen segmentiertes Silicon mit einer niedrigen freien Oberflächenenergie, während das Hartsegment durch die Fähigkeit gekennzeichnet ist an der Oberfläche des Substrates zu haften. Zusätzlich verleiht das Hartsegment dem Siliconblockcopolmer solche physikalischen Eigenschaften, dass das Siliconblockcopolymer bei 25°C nicht flüssig ist und extrudiert werden kann.

Der Ausdruck "segmentiert" bezieht sich auf eine relative kurze Länge einer Wiederholungseinheit.

Die erfindungsgemäßen Siliconblockcopolymere sind bevorzugt von der Formel A-B-A. Die Siliconblockcopolymere können mehrere verschiedene Konfigurationen aufweisen je nach der Anzahl der Polymerblöcke, die an das Weichsegment, ein durch organische Gruppen segmentiertes Silicon, angehängt sind. In ihrer einfachsten Form können die Copolymere die Konfiguration A-B aufweisen. Die Siliconblockcopolymere können auch vom Typ B-A-B oder A-B-A-B usw. sein, je nach dem Kupplungs- oder Bildungsverfahren für die Blöcke. Die erfindungsgemäßen Siliconblockcopolymere können in ihrer Zusammensetzung und Struktur variieren. Sie können gepfropfte, verzweigte oder lineare Blockcopolymere sein, als Blockcopolymere enthalten sie sich wiederholende Segmente oder Blöcke von derselben monomeren Einheit. Die durchschnittliche Blocklänge einer polymerisierten Comonomer-Komponente kann von der durchschnittlichen Blocklänge einer zweiten polymerisierten Comonomer-Komponente jedoch abweichen, und die relativen durchschnittlichen Blocklängen bestimmen weitgehend die Eigenschaften der Siliconblockcopolymeren.

Die erfindungsgemäßen Siliconblockcopolymere besitzen ein Molekulargewicht (M_{W}) von vorzugsweise 3 000 bis 2 000 000 g/mol, bevorzugt von 5 000 bis 1 000 000 g/mol, besonders bevorzugt von 10 000 bis 500 000 g/mol.

Die erfindungsgemäßen Siliconblockcopolymere enthalten die Weichsegment-Polymerkomponente (B) in Mengen von vorzugsweise 1 bis 75 Gew.-%, bevorzugt 1 bis 50 Gew.-%, besonders bevorzugt 5 bis 40 Gew.-%, jeweils bezogen auf das Gesamtgewicht des Siliconblockcopolymers.

Bevorzugt als Hartsegment-Polymerkomponente (A) ist Polystyrol. Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m- und p-Chlorphenylrest.

Ein Beispiel für ein erfindungsgemäßes Siliconblockcopolymer mit n = 0 ist ein solches der folgenden Formel: (PS = Polystyrol, R = Methylrest, m = 1-1000)

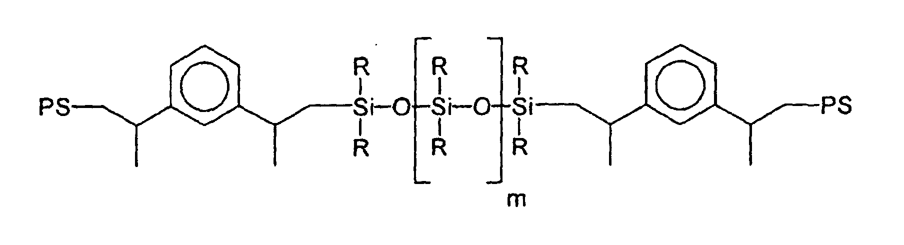

Ein Beispiel für ein erfindungsgemäßes Siliconblockcopolymer mit n = 1 ist ein solches der folgenden Formel:
(PS = Polystyrol, Me = Methylrest)

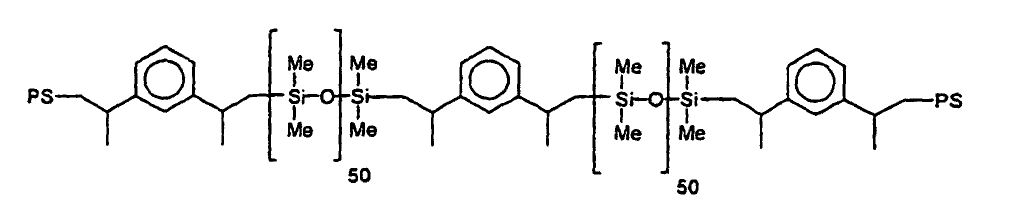

Die Herstellung von segmentierten Blockcopolymeren kann durch mehrere Vorgehensweisen bewerkstelligt werden, die sich in einem solchen Ausmaße unterscheiden, in welchem die Struktur des sich ergebenden Produktes definiert werden kann, wie dies in der US-A 4,675,361 beschrieben wird.

Eine Vorgehensweise schließt das Koppeln von zumindest zwei vorgeformten Blöcken oder Segmenten ein, die vor der Kopplungsreaktion in gesonderten Reaktionen hergestellt werden. Dieses Vorgehen bringt eine wohldefinierte Struktur mit sich, wenn die Kopplungsreaktion gleiche Blöcke oder Segmente vom Reagieren mit sich selbst abhält und sie es nur unähnlichen Blöcken oder Segmenten erlaubt, aneinander anzukoppeln.

Es mag zu anderen Kopplungsreaktionen kommen, was sich in einer weniger definierten Struktur auswirkt, falls die beiden vorgeformten Blöcke oder Segmente die Fähigkeit besitzen, (über die Kopplungreaktion) mit sich selbst ebenso zu reagieren, wie auch die unähnlichen Blöcke bzw. Segmente.

Eine bevorzugte Kopplungsreaktion ist, wenn während der Kopplungsreaktion zumindest ein vorgeformter Block bzw. ein vorgeformtes Segment mit einem zweiten Block bzw. Segment gekoppelt wird, der während der Kopplungsreaktion hergestellt wird. In diesem Fall ist die ursprüngliche Länge (Molekulargewicht) des vorgeformten Blocks oder Segmentes bekannt (aufgrund einer gesonderten Reaktion, die zu ihrer Herstellung benutzt wird), aber die Sequenzverteilung des Copolymers ist nicht genau bekannt, da sowohl ein Kopplungswie Kettenwachstum in der den zweiten Block oder das zweite Segment produzierenden Reaktion möglich ist.

Gegenstand der Erfindung ist daher weiterhin ein Verfahren zur Herstellung der erfindungsgemäßen thermoplastischen Siliconblockcopolmeren, dadurch gekennzeichnet, dass das Weichsegmentpolymer (B') der allgemeinen Formel

Z'-[(SiR₂O)ₘSiR₂-X-]ₙ(SiR₂O)ₘSiR₂-Z' (I'),

wobei R, X, Z', n und m die oben dafür angegebene Bedeutung haben,
mit Monomeren der Hartsegment-Polymerkomponente (A)
in Gegenwart von.Radikalinitiatoren
in einer radikalischen Polymerisation umgesetzt werden.

Es kann eine Art von Monomer oder Mischungen von verschiedenen Monomeren der Hartsegment-Polymerkomponente (A) eingesetzt werden.
Bevorzugt als Monomer der Hartsegment-Polymerkomponente (A) ist Styrol.

Das bei dem erfindungsgemäßen Verfahren eingesetzte Weichsegmentpolymer (B') hat eine Viskosität von vorzugsweise 20 bis 100 000 mPa.s bei 25°C, bevorzugt 500 bis 10 000 mPa.s bei 25°C.

Bei dem erfindungsgemäßen Verfahren wird die Menge an eingesetztem Monomer von (A) und Weichsegmentpolymer (B') so gewählt, dass die erhaltenen Siliconblockcopolymere die Weichsegment-Polymerkomponente (B) in Mengen von vorzugsweise 1 bis 75 Gew.-%, bevorzugt 1 bis 50 Gew.-%, besonders bevorzugt 5 bis 40 Gew.-%, jeweils bezogen auf das Gesamtgewicht des Siliconblockcopolymers, enthalten.

Das erfindungsgemäße Verfahren wird bei einer Temperatur von vorzugsweise 40 bis 100°C, bevorzugt 60 bis 90°C und vorzugsweise beim Druck der umgebenden Atmosphäre, also etwa bei 1020 hPa (abs.), durchgeführt. Es kann aber auch bei hoheren oder niedrigeren Drücken durchgeführt werden.

Vor der Kopplungsreaktion wird das durch organische Gruppen segmentierte Silicon, das Weichsegmentpolymer (B'), in einer Hydrosilylierungsreaktion hergestellt, indem ein α,ω-Dihydrogenpolydiorganosiloxan (1) der Formel

H-(SiR₂O)ₘSiR₂-H

wobei R und m die oben dafür angegebene Bedeutung haben mit 1,3-Diisopropenylbenzol (2)
in Gegenwart eines die Anlagerung von Si-gebundenen Wasserstoff an aliphatische Doppelbindung fördernden Katalysators (3) umgesetzt wird.

Wenn in der Formel (I) n gleich 0 ist, wird das 1,3-Diisopropenylbenzol (2) bei der Hydrosilylierungsreaktion in solchen Mengen eingesetzt, dass das Verhältnis von C=C-Doppelbindung in 1,3-Diisopropenylbenzol (2) zu Si-gebundenem Wasserstoff in α,ω-Dihydrogenpolydiorganosiloxan (1), also das C=C/SiH-Verhältnis, vorzugsweise 5,0 bis 2,0 beträgt.
Wenn in der Formel (I) n eine ganze Zahl von 1 bis 20 ist, wird das 1,3-Diisopropenylbenzol (2) bei der Hydrosilylierungsreaktion in solchen Mengen eingesetzt, dass das Verhältnis von C=C-Doppelbindung in 1,3-Diisopropenylbenzol (2) zu Si-gebundenem Wasserstoff in α,ω-Dihydrogenpolydiorganosiloxan (1), also das C=C/SiH-Verhältnis, vorzugsweise 1,5 bis 1,0 beträgt.

Bei dem Katalysator (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di- chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird bei der Hydrosilylierungsreaktion vorzugsweise in Mengen von 0,01 bis 10 Gew.-ppm (Gewichtsteilen je Million Gewichtsteilen), bevorzugt in Mengen von 0,5 bis 5 Gew.-ppm, jeweils berechnet als elementares Platin und bezogen auf das Gesamtgewicht des α,ω-Dihydrogenpolydiorganosiloxan (1) und des 1,3-Diisopropenylbenzols (2), eingesetzt.

Bei der radikalischen Polymerisation kann es sich um eine Emulsionspolymerisation, Suspensionspolymerisation, Polymerisation in Lösung oder eine Fällungspolymerisation in einem Lösungsmittel, welches das Monomere löst, aber das resultierende Siliconblockcopolymer fällt, handeln.

Beispiele für Radikalinitiatoren sind öl-lösliche Initiatoren, wie tert.Butylperoxy-2-ethylhexanoat, tert.Butylperoxypivalat, tert.Butylperoxyneodecanoat, Dibenzoylperoxid, tert.Amylperoxypivalat, Di(2-ethylhexyl)peroxydicarbonat, 1,1-Bis(t-Butylperoxy)-3,3,5-trimethylcyclohexan und Di-(4-tert.Butylcyclohexyl)peroxydicarbonat.

Bei dem erfindungsgemäßen Verfahren können Reduktionsmittel, wie Natriumsulfit, Natriumhydrogencarbonat oder Ascorbinsäure, mitverwendet werden.

Bei der Emulsionspolymerisation können wasserlösliche Initiatoren, wie Ammoniumperoxodisulfat, Kaliumperoxodisulfat und Natriumperoxodisulfat gegebenenfalls zusammen mit einem Reduktionsmittel, verwendet werden.

Weiterhin kann das Molekulargewicht M_{w} des Siliconblockcopolymeren gesteuert werden durch Zugabe von Kettentransfermitteln oder -reglern, wie Isopropanol, Ethylbenzol (vorzugsweise bei der Suspensionspolymerisation) oder Dodecylmercaptan.

Bei der Polymerisation in Lösung können organische Lösungsmittel, wie Tetrahydrofuran (THF), Petrolether, Ethylacetat, Isopropanol, Ethanol, Methanol, Toluol oder Benzol verwendet werden, wobei Toluol bevorzugt ist.
Es kann eine Mischung dieser organischen Lösungsmittel eingesetzt werden, um eine Fällung des Siliconblockcopolymers während der Polymerisation zu erreichen und die Menge des organischen Lösungsmittels oder deren Mischungen erlaubt die Regulierung des Molekulargewichtes. Die bei der Suspensionspolymerisation erhaltenen Siliconblockcopolymere können destilliert werden, vorzugsweise unter reduziertem Druck, oder mit Wasserdampf behandelt werden ("steam stripping") um die flüchtigen organischen Verbindungen zu entfernen.

Die erfindungsgemäßen Siliconblockcopolymere werden vorzugsweise zur Herstellung von abhäsiven Überzügen, also klebrige Stoffe abweisende Überzüge, z.B. Trennpapier, Trennkunststofffolien oder Trennfilme, verwendet.

Die zum Ziel gesetzten Trenneigenschaften der abhäsiven überzüge oder Filme können durch ein beliebiges oder durch eine Kombination der folgenden Verfahren erreicht werden:
(a) Variieren der Kettenlänge des Weichsegmentes.
(b) Variieren der Gewichtsprozente des Weichsegmentes im Siliconblockcopolymer.
(c) Variieren des Grades der Segmentierung in dem durch organische Gruppen segmentierten Silicon, dem Weichsegment.
(d) Variieren des Grades der Vernetzung zwischen den Copolymerketten.

Die mit den erfindungsgemäßen Siliconblockcopolymeren erhaltenen abhäsiven Überzüge haben sehr gute Trenneigenschaften, die für viele verschiedene spezifische Anwendungen zugeschnitten werden können. Die erfindungsgemäßen abhäsiven Überzüge weisen eine gute Haftung zum Substrat auf. Durch Auswahl der Softsegment-Polymerkomponente und deren Menge im erfindungsgemäßen Siliconblockcopolymer ist es möglich einen weiten Bereich von gewünschten Trenneigenschaften zu erhalten. Die erfindungsgemäßen Siliconblockcopolymere können vorzugsweise durch Extrusion auf Substrate aufgebracht werden oder bei der Herstellung der Folien in einem Coextrusionsvorgang mitaufgebracht werden.

Die erfindungsgemäßen Siliconblockcopoloymere können, vorzugsweise als Lösungen in organischen Lösungsmitteln, wie Toluol, Benzin, Ethylacetat oder Xylol, auf klebrige Stoffe abweisend zu machenden Oberflächen aufgetragen werden. Das Auftragen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Beispiele für klebrige Stoffe abweisend zu machende Oberflächen sind diejenigen von Papier, Holz, Kork und Kunststofffolien, z.B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockengläctzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverstandlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Siliconblockcopoloymere können auch extrudiert werden um Überzüge herzustellen, oder in Abmischungen mit filmbildenden Polymeren coextrudiert werden, um Filme herzustellen.

Die Auftragungsmenge des erfindungsgemäßen Siliconblockcopolymers in den Überzügen kann empirisch vom Fachmann bestimmt werden und hängt weitgehend von seiner Zusammensetzung und von der Anwendung des beschichteten Substrates ab.

Die erfindungsgemäßen Überzüge bzw. Filme bieten einen Bereich an Trenneigenschaften, der für eine Verwendung bei verschiedenen Trennanwendungen zweckmäßig ist. Die Überzüge bzw. Filme sind besonders für die Herstellung von Substraten mit abhäsiven Eigenschaften, für die Herstellung von vorimprägnierten Materialformen und bei der Herstellung von Foliengießverbindungen (SMC) und dicken Gießverbindungen (TMC), wie auch von Massengießverbindungen (BMC) anwendbar. Die Überzüge bzw. Filme sind auch als Trägerbahn für die

Herstellung von faserverstärkten Platten (FRP) besonders anwendbar.

### Herstellung der Weichsegment-Polymerkomponente:

### Beispiel 1 (1,3-diisopropenylbenzolendständiges Polysiloxan): Viskosität: 110 mm²/s bei 25°C; n = 0

1,3-Diisopropenylbenzol und Polydimethylsiloxan, welches endstandige Si-H Gruppen besitzt und eine Kettenlänge von 50 Siloxaneinheiten aufweist, wird 5 Stunden bei 80°C mit 10 ppm eines Platinkomplex, der als Katalysator wirkt, umgesetzt. Das molare Verhältnis aus Doppelbindungen von 1,3-Diisopropenylbenzol zu Si-H Gruppen des Polydimethylsiloxans beträgt 3:1. Nach Ende der Reaktion werden flüchtige Anteile unter Vakuum entfernt. Man erhält ein Polymer mit einer Viskosität von 110 mm²/s bei 25°C.

### Beispiel 2 (1,3-diisopropenylbenzolendständiges Polysiloxan): Viskosität: 1150 mm²/s bei 25°C; n = 0

1,3-Diisopropenylbenzol und Polydimethylsiloxan, welches endständige Si-H Gruppen besitzt und eine Kettenlänge von 200 Siloxaneinheiten aufweist, wird 5 Stunden bei 80°C mit 10 ppm eines Platinkomplex, der als Katalysator wirkt, umgesetzt. Das molare Verhältnis aus Doppelbindungen von 1,3-Diisopropenylbenzol zu Si-H Gruppen des Polydimethylsiloxans beträgt 3:1. Nach Ende der Reaktion werden flüchtige Anteile unter Vakuum entfernt. Man erhält ein Polymer mit einer Viskosität von 1150 mm²/s bei 25°C.

### Beispiel 3 (durch organische Gruppen segmentiertes Silicon): Viskosität: 1250 mm²/s bei 25°C; Siloxansegmente n = 5

1,3-Diisopropenylbenzol und Polydimethylsiloxan, welches endständige Si-H Gruppen besitzt und eine Kettenlänge von 50 Siloxaneinheiten aufweist, wird 5 Stunden bei 80°C mit 10 ppm eines Platinkomplex, der als Katalysator wirkt, umgesetzt. Das molare Verhältnis aus Doppelbindungen von Diisopropenylbenzol zu Si-H Gruppen des Polydimethylsiloxans beträgt 1,27. Nach Ende der Reaktion werden flüchtige Anteile unter Vakuum entfernt. Man erhält ein Polymer mit einer Viskosität von 1250 mm²/s bei 25°C. Die Anzahl an Siloxansegmenten ist 5.

### Beispiel 4 (durch organische Gruppen segmentiertes Silicon): Viskosität: 2200 mm²/s bei 25°C; Siloxansegmente n = 7

1,3-Diisopropenylbenzol und Polydimethylsiloxan, welches endständige Si-H Gruppen besitzt und eine Kettenlänge von 50 Siloxaneinheiten aufweist, wird 5 Stunden bei 80°C mit 10 ppm eines Platinkomplex, der als Katalysator wirkt, umgesetzt. Das molare Verhältnis aus Doppelbindungen von Diisopropenylbenzol zu Si-H Gruppen des Polydimethylsiloxans beträgt 1,20. Nach Ende der Reaktion werden flüchtige Anteile unter Vakuum entfernt. Man erhält ein Polymer mit einer Viskosität von 2200 mm²/s bei 25°C. Die Anzahl an Siloxansegmenten ist 7.

### Beispiel 5 (durch organische Gruppen segmentiertes Silicon): Viskosität: 10500 mm²/s bei 25°C; Siloxansegmente n = 11

1,3-Diisopropenylbenzol und Polydimethylsiloxan, welches endständige Si-H Gruppen besitzt und eine Kettenlänge von 50 Siloxaneinheiten aufweist, wird 5 Stunden bei 80°C mit 10 ppm eines Platinkomplex, der als Katalysator wirkt, umgesetzt. Das molare Verhältnis aus Doppelbindungen von Diisopropenylbenzol zu Si-H Gruppen des Polydimethylsiloxans beträgt 1,10. Nach Ende der Reaktion werden flüchtige Anteile unter Vakuum ehtfernt. Man erhält ein Polymer mit einer Viskosität von 10500 mm²/s bei 25°C. Die Anzahl an Siloxansegmenten ist 11.

### Herstellung der Siliconblockcopolymere:

### Polymerisation in Suspension:

### Beispiel 6a)

In einem 21-Dreihalskolben mit Rührer, Rückflußkühler, Dosiervorrichtung, Thermometer, Heizvorrichtung (mit Temperaturkontrolle) und Stickstoff-Anschluß werden 1,22 kg entionisiertes Wasser, 3,77 g Kupferacetat (1 %ige wäßrige Lösung) und 50,22 g Polyvinylpyrrolidon (PVP K90; 5 %ige wäßrige Lösung) vorgelegt. Die Lösung wird 10 min lang mit 200 Upm gerührt. In der Zwischenzeit wird eine Mischung von 200,86 g 1,3-diisopropenylbenzolendständiges Polysiloxan aus Beispiel 1 und 301,3 g Styrol vorbereitet (Massenverhältnis Styrol/Silikon = 60/40). Zu dieser Mischung werden 25,11 g Toluol gegeben. Ebenso wird eine Kombination von 3 unterschiedlichen Initiatoren zu der Monomermischung gegeben. Als Initiatoren werden 3,07 g tert.Butylperoxy-2-ethylhexanoat (TBPEH; 98 %; Halbwertszeit t1/2 = 1 h bei 92°C), 4,02 g tert.Butylperoxy-pivalat (TBPPI; 75 % in Aliphaten; Halbwertszeit t1/2 = 1 h bei 74°C) und 5,42 g tert.Butyl- peroxyneodecanoat (TBPND; 75 % in Aliphaten; Halbwertszeit t1/2 = 1 h bei 64°C) verwendet. Die Monomerenmischung mit den Initiatoren wird 5 min bei Raumtemperatur gerührt und dann langsam zu der wäßrigen Vorlage in den Dreihalskolben gegeben. Der Kolbeninhalt wird durch Rühren bei 200 Upm vermischt, wodurch die Monomeren in Wasser suspendiert werden. Anschließend wird die Temperatur innerhalb einer Stunde (1 h) vorsichtig auf 55°C erhöht und 4 h lang gehalten. Dann wird die Temperatur innerhalb 1 h auf 70°C erhöht und 4 h lang gehalten. Um auszupolymerisieren, wird die Temperatur auf 80°C erhoht und 5 h lang gehalten. Der Ansatz wird auf Raumtemperatur abgekühlt. Die erhaltenen Perlen werden durch 3maliges Dekantieren und Abnutschen isoliert. Das Produkt wird in der Nutsche 5mal mit entionisiertem Wasser gewaschen. Die milchig-trüben Perlen mit Durchmessern von ca. 0,2-2,5 mm werden 24 h lang bei 35°C im Trockenschrank getrocknet.
Analyse 6a):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 198000 g/mol (bezogen auf Polystyrol-Standards)
Mittleres Molekulargewicht M_{N}: 24000 g/mol
Dispersität: 8,25
Tg: -120°C (Polydimethylsiloxan-Block); + 100°C (PolystyrolBlock)

### Beispiel 6b)

Analog Beispiel 6a) mit dem Unterschied, dass bei der Synthese der Siliconblockcopolymere in Suspension auf die Zugabe von Toluol verzichtet wird. Es werden ansonsten die gleichen Monomere und die gleichen Mengen wie in Beispiel 6a) eingesetzt.
Analyse 6b):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 155000 g/mol (bezogen auf Polystyrol-Standards)
Mittleres Molekulargewicht M_{N}: 18000 g/mol
Dispersität: 8,6
Tg: -120°C (Polydimethylsiloxan-Block); + 100°C (Polystyrol-Block)

### Beispiel 6c)

Analog Beispiel 6a) mit dem Unterschied, dass statt Toluol 26,0 g Ethylbenzol eingesetzt wurden.
Analyse 6c):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 140000 g/mol (bezogen auf Polystyrol-Standards)
Mittleres Molekulargewicht M_{N}: 17500 g/mol
Dispersität: 8,0
Tg: -120°C (Polydimethylsiloxan-Block); + 100°C (PolystyrolBlock)

### Beispiel 6d)

Wie Beispiel 6a) nur mit einer Monomermischung Styrol/Silikon = 80/20 (Masse/Masse).
Analyse 6d):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 230000 g/mol (bezogen auf Polystyrol-Standards)
Mittleres Molekulargewicht M_{N}: 24000 g/mol
Dispersität: 9,6
Tg: -120°C (Polydimethylsiloxan-Block); + 100°C (PolystyrolBlock)

### Beispiel 6e)

Wie Beispiel 6a) nur mit 5,12 g tert.Butylperoxy-2-ethylhexanoat (TBPEH; 98 %), 6,7 g tert.Butylperoxypivalat (TBPPI; 75 % in Aliphaten) und 9,0 g tert.Butylperoxyneodecanoat (TBPND; 75 % in Aliphaten).
Analyse 6e):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 170000 g/mol (bezogen auf Polystyrol-Standards)
Mittleres Molekulargewicht M_{N}: 21000 g/mol
Dispersität: 8,1
Tg: -120°C (Polydimethylsiloxan-Block); + 100°C (PolystyrolBlock)

### Beispiel 6f)

Wie Beispiel 6a) nur mit einer maximalen Polymerisationstemperatur von 90°C. Es wird 4 h bei 55°C, 4 h bei 70°C, 2 h bei 80°C und 5 h bei 90°C polymerisiert.
Analysen 6f):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 220000 g/mol (bezogen auf Polystyrol-Standards)
Mittleres Molekulargewicht M_{N}: 23000 g/mol
Dispersität: 9,6
Tg: -120°C (Polydimethylsiloxan-Block); + 100°C (PolystyrolBlock)

### Beispiel 6g)

Wie Beispiel 6a) nur mit 3,07 g Dibenzoylperoxid (wasserfeuchtes Pulver; Halbwertszeit t1/2 = 1 h bei 91 °C), 4,02 g tert.Amylperoxypivalate (75 % in Aliphaten; Halbwertszeit t1/2 = 1 h bei 72°C) and Di(2-ethylhexyl)peroxydicarbonate (75 % in Aliphaten; Halbwertszeit t1/2 = 1 h bei 57°C).
Analysen 6g):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 280000 g/mol (bezogen auf Polystyrol-Standards)
Mittleres Molekulargewicht M_{N}: 26000 g/mol
Dispersität: 10,8
Tg: -120°C (Polydimethylsiloxan-Block); + 100°C (PolystyrolBlock)

### Beispiel 7a)

In einem 21-Dreihalskolben mit Rührer, Rückflußkühler, Dosiervorrichtung, Thermometer, Heizvorrichtung (mit Temperaturkontrolle) und Stickstoff-Anschluß werden 1,22 kg entionisiertes Wasser, 3,77 g Kupferacetat (1 %ige wäßrige Lösung) und 50,22 g Polyvinylpyrrolidon (PVP K90; 5 %ige wäßrige Lösung) vorgelegt. Die Lösung wird 10 min lang mit 200 Upm gerührt. In der Zwischenzeit wird eine Mischung von 200,9 g durch organische Gruppen segmentiertes Silicon aus Beispiel 3 und 301,3 g Styrol vorbereitet (Massenverhältnis Styrol/Silicon = 60/40). Zu dieser Mischung werden 25,11 g Toluol gegeben. Ebenso wird eine Kombination von 3 unterschiedlichen Initiatoren zu der Monomermischung gegeben. Als Initiatoren werden 3,07 g tert.Butylperoxy-2-ethylhexanoat (TBPEH; 98 %; Halbwertszeit t1/2 = 1 h bei 92°C), 4,02 g tert.Butylperoxypivalat (TBPPI; 75 % in Aliphaten; Halbwertszeit t1/2 = 1 h bei 74°C) und 5,42 g tert.Butylperoxyneodecanoat (TBPND; 75 % in Aliphaten; Halbwertszeit t1/2 = 1 h bei 64°C) verwendet. Die Monomerenmischung mit den Initiatoren wird 5 min bei Raumtemperatur gerührt und dann langsam zu der wäßrigen Vorlage in den Dreihalskolben gegeben. Der Kolbeninhalt wird durch Rühren bei 200 Upm vermischt, wodurch die Monomeren in Wasser suspendiert werden. Anschließend wird die Temperatur innerhalb einer Stunde (1 h) vorsichtig auf 55°C erhöht und 4 h lang gehalten. Dann wird die Temperatur innerhalb 1 h auf 70°C erhöht und 4 h lang gehalten. Um auszupolymerisieren, wird die Temperatur auf 80°C erhöht und 5 h lang gehalten. Der Ansatz wird auf Raumtemperatur abgekühlt. Die erhaltenen Perlen werden durch 3maliges Dekantieren und Abnutschen isoliert. Das Produkt wird in der Nutsche 5mal mit entionisiertem Wasser gewaschen. Die milchig-trüben Perlen mit Durchmessern von ca. 0,2-2,5 mm werden 24 h lang bei 35°C im Trockenschrank getrocknet.
Analyse 7a):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 250000 g/mol (bezogen auf Polystyrol-Standards)
Mittleres Molekulargewicht M_{N}: 25000 g/mol
Dispersität: 10,0
Tg: -120°C (Polydimethylsiloxan-Block); + 100°C (PolystyrolBlock)

### Beispiel 7b)

Analog Beispiel 7a) mit dem Unterschied, daß bei der Synthese der Siliconblockcopolymers in Suspension auf die Zugabe von Toluol verzichtet wird. Es werden ansonsten die gleichen Monomere und die gleichen Mengen wie in Beispiel 7a) eingesetzt.
Analyse 7b):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 91000 g/mol (bezogen auf Polystyrol-Standards)
Mittleres Molekulargewicht M_{N}: 19000 g/mol
Dispersität: 4,8
Tg: -120°C (Polydimethylsiloxan-Block); + 100°C (Polyscyrol-Block)

### Beispiel 7c)

Analog Beispiel 7a) mit dem Unterschied, daß statt Toluol 26,0 g Ethylbenzol eingesetzt wurden.
Analyse 7c): Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 200000 g/mol (bezogen auf Polystyrol-Standards)
Mittleres Molekulargewicht M_{N}: 23000 g/mol
Dispersität: 8,7
Tg: -120°C (Polydimethylsiloxan-Block); + 100°C (PolystyrolBlock)

### Beispiel 7d)

Wie Beispiel 7a) nur mit einer Monomermischung Styrol/Silicon = 80/20 (Masse/Masse).
Analyse 7d). Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 205000 g/mol (bezogen auf Polystyrol-Standards)
Mittleres Molekulargewicht M_{N}: 24500 g/mol
Dispersität: 8,4
Tg: -120°C (Polydimethylsiloxan-Block); + 100°C (PolystyrolBlock)

### Beispiel 7e)

Wie Beispiel 7a) nur mit 5,12 g tert.Butylperoxy-2-ethylhexanoat (TBPEH; 98 %), 6,7 g tert.Butylperoxypivalat (TBPPI; 75 % in Aliphaten) und 9,0 g tert.Butylperoxyneodecanoat (TBPND; 75 % in Aliphaten).
Analyse 7e):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 150000 g/mol (bezogen auf Polystyrol-Standards)
Mittleres Molekulargewicht M_{N}: 20000 g/mol
Dispersität: 7,5
Tg: -120°C (Polydimethylsiloxan-Block); + 100°C (PolystyrolBlock)

### Beispiel 7f)

Wie Beispiel 7a) nur mit einer maximalen Polymerisationstemperatur von 90°C. Es wird 4 h bei 55°C, 4 h bei 70°C, 2 h bei 80°C und 5 h bei 90°C polymerisiert.
Analysen 7f):
Festgehalt: >98 %
Mittlerer Durchmesser der Perlen: ca. 1 mm
Farbe: milchig weiß
Molekulargewicht M_{W} (Massenmittel aus GPC; Elutionsmittel THF): 250000 g/mol (bezogen auf Polystyrol-Standards)
Mittleres Molekulargewicht M_{N}: 25000 g/mol
Dispersität: 10,0
Tg: -120°C (Polydimethylsiloxan-Block); + 100°C (PolystyrolBlock)

### Beispiel 7g)

Wie Beispiel 7a) nur mit 3,07 g Dibenzoylperoxid (wasserfeuchtes Pulver; Halbwertszeit t1/2 = 1 h bei 91 °C), 4,02 g tert.Amylperoxypivalate (75 % in Aliphaten; Halbwertszeit t1/2 = 1 h bei 72°C) and Di(2-ethylhexyl)peroxydicarbonate (75 % in Aliphaten; Halbwertszeit t1/2 = 1 h bei 57°C).
Analysen 7g):
Festgehalt: >98 %
Mittlerer Durchmesser der Perlen: ca. 1 mm
Farbe: milchig weiß
Molekulargewicht M_{W} (Massenmittel aus GPC; Elutionsmittel
THF): 235000 g/mol (bezogen auf Polystyrol-Standards) Mittleres Molekulargewicht M_{N}: 25000 g/mol
Dispersität: 11,0
Tg: -120°C (Polydimethylsiloxan-Block); + 100°C (PolystyrolBlock)

### Polymerisation in Lösung:

### Beispiel 8)

In einem 10 l Autoklaven mit Rührer, Dosiervorrichtung, Rückflußkühler, Thermometer, Heizvorrichtung (mit Temperaturkontrolle) und Stickstoff-Zufuhr werden 6,39 kg Toluol vorgelegt. Unter Rühren bei 120 Upm werden folgende Edukte nacheinander zugegeben:
668,8 g 1,3-diisopropenylbenzolendständiges Polysiloxan aus Beispiel 1; 2,01 kg Styrol; 30,9 g Interox TMCH 50 AL (Initiator; 1,1-Bis(t-Butylperoxy) 3,3,5-trimethylcyclohexan; 50 %ig in Aliphaten). Anschließend wird zur Polymerisation auf 110 °C erhitzt. Nach 3 h werden bei ca. 50 % Monomerumsatz erneut 30,9 g TMCH zugegeben. Der Ansatz wird insgesamt 7 h bei 110 °C mit 120 Upm gerührt. Zur Nachbereitung werden jeweils 4mal 130 g Styrol mit 14,3 g TMCH zugegeben (zunächst 2mal alle 30 min, dann 2mal jede Stunde). Zur Nachpolymerisation werden 6mal 14,3 g Interox BCHPC-75-W (Di-(4-tert.Butylcyclohexyl)-peroxydicarbonat), gelöst in 60 ml Toluol, zugegeben. Nach erfolgter Polymerisation kann die Lösung (ca. 30 %ig) mit dem Copolymer direkt verwendet werden. Zur Isolation des Feststoffs wird die Lösung destilliert.
Analysen 8:
Festgehalt > 98 %
Granulat
Molekulargewicht M_{W} (Massenmittel aus GPC; Elutionsmittel
THF): 91000 g/mol (bezogen auf Polystyrol-Standards)
Mittleres Molekulargewicht M_{N}: 11500 g/mol
Dispersität: 7,9

### Beispiel 9)

In einem 10 l Autoklaven mit Rührer, Dosiervorrichtung, Rückflußkühler, Thermometer, Heizvorrichtung (mit Temperaturkontrolle) und Stickstoff-Zufuhr werden 6,39 kg Toluol vorgelegt. Unter Rühren bei 120 Upm werden folgende Edukte nacheinander zugegeben:
668,8 g durch organische Gruppen segmentiertes Silicon aus Beispiel 3; 2,01 kg Styrol; 30,9 g Interox TMCH 50 AL (Initiator; 1,1-Bis(t-Butylperoxy)-3,3,5-trimethylcyclohexan; 50 %ig in Aliphaten). Anschließend wird zur Polymerisation auf 110 °C erhitzt. Nach 3 h werden bei ca. 50 % Monomerumsatz erneut 30,9 g TMCH zugegeben. Der Ansatz wird insgesamt 7 h bei 110 °C mit 120 Upm gerührt. Zur Nachbereitung werden jeweils 4mal 130 g Styrol mit 14,3 g TMCH zugegeben (zunächst 2mal alle 30 min, dann 2mal jede Stunde). Zur Nachpolymerisation werden 6mal 14,3 g Interox BCHPC-75-W (Di-(4-tert.Butylcyclohexyl)peroxydicarbonat), gelöst in 60 ml Toluol, zugegeben. Nach erfolgter Polymerisation kann die Lösung (ca. 30 %ig) mit dem Siliconblockcopolymer direkt verwendet werden. Zur Isolation des Feststoffs wird die Lösung destilliert.
Analysen 9:
Festgehalt > 98 %
Granulat
Molekulargewicht M_{W} (Massenmittel aus GPC; Elutionsmittel
THF): 80000 g/mol (bezogen auf Polystyrol-Standards)
Mittleres Molekulargewicht M_{N}: 7000 g/mol
Dispersitat: 11,4
Anwendung: Beschichtung:

### Beispiel 10)

Die Siliconblockcopolymere aus den Beispielen 6a - g und 8 werden in Toluol gelöst. PP-Folien (Polypropylen-Folien) werden mit der Lösung beschichtet und die abhäsiven Eigenschaften werden nach FINAT Test Methode Nr.3 mit den TESA Testklebebändern A 7475, K 7576, und T 154 bestimmt. Die Ergebnisse sind in der Tabelle 1 zusammengefasst.

**Tabelle 1:**

| | Trennkraft [N/m] | | |
|---|---|---|---|
| | A 7475 | K 7576 | T 154 |
| 3a | 28,1 | 35,1 | 5,6 |
| 3b | 8,0 | 15,4 | 2,2 |
| 3c | 58,5 | 114,3 | 15,3 |
| 3d | 22,5 | 46,0 | 4,5 |
| 3e | 22,0 | 39,5 | 4,2 |
| 3f | 33,9 | 49,9 | 5,9 |
| 3g | 16,0 | 24,8 | 2,8 |
| 4a | 60,2 | 127,9 | 15,3 |

### Beispiel 11)

Die Siliconblockcopolymere aus den Beispielen 7a - g und 9 werden in Toluol gelöst. PP-Folien (Polypropylen-Folien) werden mit der Lösung beschichtet und die abhäsiven Eigenschaften werden nach FINAT Test Methode Nr.3 mit den TESA Testklebebändern A 7475, K 7576, und T 154 bestimmt. Die Ergebnisse sind in der Tabelle 2 zusammengefasst.

**Tabelle 2:**

| | Trennkraft [N/m] | | |
|---|---|---|---|
| | A 7475 | K 7576 | T 154 |
| 4a | 20,1 | 35,8 | 4,5 |
| 4b | 55,7 | 66,6 | 12,1 |
| 4c | 56,5 | 104,3 | 13,8 |
| 4d | 31,1 | 32,1 | 5,4 |
| 4e | 21,0 | 31,5 | 4,6 |
| 4f | 32,9 | 45,9 | 4,7 |
| 4g | 17,2 | 26,8 | 3,3 |
| 5 | 54,2 | 97,9 | 13,3 |

### Anwendung: Extrusion:

### Beispiel 12)

Die Siliconblockcopolymere aus den Beispielen 6a - g und 8 wurden auf ein filmisches Substrat coextrudiert. Die Trennkräfte wurden von der Siliconblockcopolymer-Seite bestimmt. Die coextrudierten Filme zeigen gegenüber den TESA Testklebebändern ähnliche Werte wie gegenüber den aus Lösung beschichteten Folien.

### Beispiel 13)

Die Siliconblockcopolymere aus den Beispielen 7a - g und 9 wurden auf ein filmisches Substrat coextrudiert. Die Trennkräfte wurden von der Siliconblockcopolymer-Seite bestimmt. Die coextrudierten Filme zeigen gegenüber den TESA Testklebebändern ähnliche Werte wie gegenüber den aus Lösung beschichteten Folien.

## Patentansprüche

1. Thermoplastische Siliconblockcopolymere enthaltend
(A) eine Hartsegment-Polymerkomponente ausgewählt aus der Gruppe bestehend aus Polystyrol, Polymethylmethacrylat, Polybutylacrylat, Polyacrylnitril, Vinylcopolymere und Mischpolymere dieser Polymere, und
(B) eine Weichsegment-Polymerkomponente der allgemeinen Formel
G-[(SiR₂O)ₘSiR₂-X-]ₙ(SiR₂O)ₘSiR₂-G (I),
wobei R gleich oder verschieden sein kann und einen einwertigen gegebenenfalls halogenierten Kohlenwasserstoffrest mit 1 bis 18 Kohlenstoffatom(en) je Rest bedeutet,
X ein zweiwertiger Rest ausgewählt aus der Gruppe bestehend aus den Resten der Formel 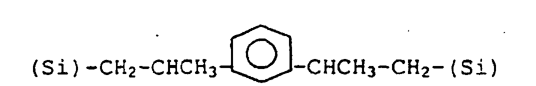 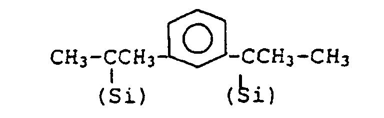 und 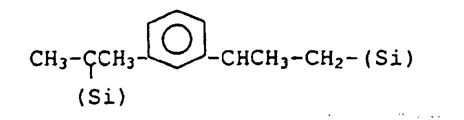 ist,
G gleich oder verschieden sein kann und einen Rest (A)-Z-(Si) oder Z'-(Si) bedeutet,
wobei Z ein zweiwertiger Rest ausgewählt aus der Gruppe bestehend aus Resten der Formel 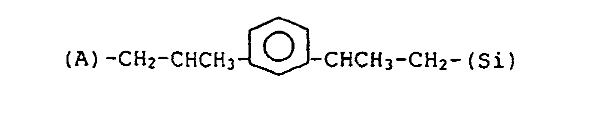 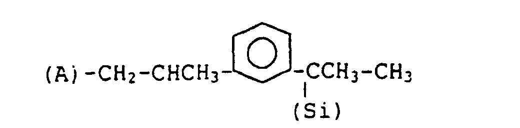 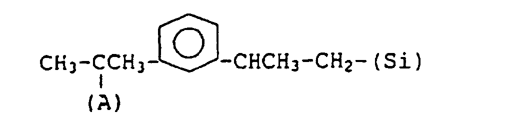 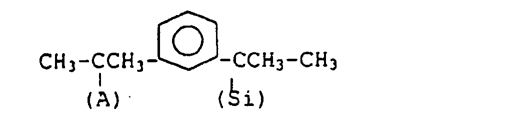 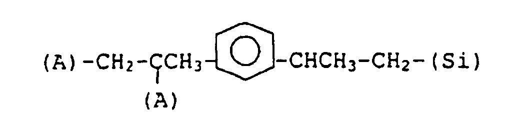 und 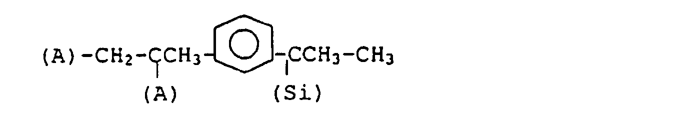 ist und Z' ein einwertiger Rest der Formel 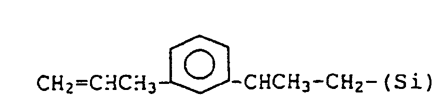 und/oder 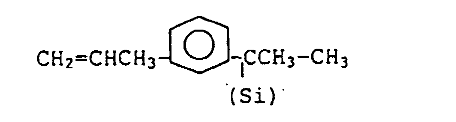 ist,
wobei (A)- eine Bindung zur Hartsegment-Polymerkomponente (A) und (Si)- eine Bindung zum Siliciumatom in (B) bedeutet,
mit der Maßgabe, dass in der Formel (I) höchstens ein Rest G ein Rest Z'- sein kann,
m eine ganze Zahl von 1 bis 1000 und
n 0 oder eine ganze Zahl von 1 bis 20 ist,
mit der Maßgabe, dass wenn n nicht 0 ist für das Produkt aus n und m gilt: 4≤n·m≤1000.

2. Thermoplastische Siliconblockcopolymere nach Anspruch 1, **dadurch gekennzeichnet, dass** (A) Polystyrol ist.

3. Thermoplastische Siliconblockcopolymere nach Anspruch 1 oder 2, **dadurch gekennzeichnet, dass** es solche der Formel A-B-A sind, wobei A und B die in Anspruch 1 dafür angegebene Bedeutung haben.

4. Verfahren zur Herstellung der thermoplastischen Siliconblockcopolymere nach Anspruch 1, 2 oder 3, **dadurch gekennzeichnet, dass**
das Weichsegmentpolymer (B') der allgemeinen Formel
Z'-[(SiR₂O)ₘSiR₂-X-]ₙ(SiR₂O)ₘSiR₂-Z' (I'),
wobei R, X, Z', n und m die in Anspruch 1 dafür angegebene Bedeutung haben,
mit Monomeren der Hartsegment-Polymerkomponente (A)
in Gegenwart von Radikalinitiatoren
in einer radikalischen Polymerisation umgesetzt werden.

5. Verfahren nach Anspruch 4, **dadurch gekennzeichnet, dass** als Monomer der Hartsegment-Polymerkomponente (A) Styrol eingesetzt wird.

6. Verwendung der thermoplastischen Siliconblockcopolymere nach Anspruch 1, 2 oder 3 zur Herstellung von abhäsiven Überzüge.

7. Verwendung der thermoplastischen Siliconblockcopolymere nach Anspruch 1, 2 oder 3 in Abmischungen mit filmbildenden Polymeren zur Herstellung von abhäsiven Überzügen oder Filmen.

## Revendications

1. Copolymères thermoplastiques à blocs de silicone contenant ,
(A) un composant polymère à segments durs, choisi dans le groupe constitué par le polystyrène, le poly(méthacrylate de méthyle), le poly-(acrylate de butyle), le polyacrylonitrile, les copolymères de vinyle et les polymères mixtes de ces polymères et
(B) un composant polymère à segments mous, de formule générale
G-[(SiR₂O)ₘSiR₂-X-]ₙ(SiR₂O)ₘSiR₂-G (I),
où R peut être identique ou différent et signifie un radical hydrocarboné monovalent, le cas échéant halogéné comprenant 1 à 18 atomes de carbone par radical,
X représente un radical divalent choisi dans le groupe constitué par les radicaux de formule 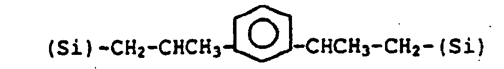 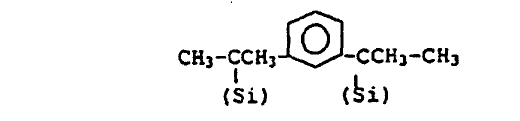 et 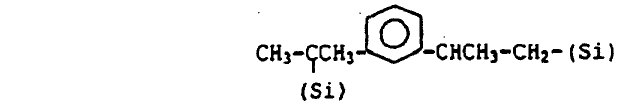 G peut être identique ou différent et signifie un radical (A)-Z-(Si) ou Z'-(Si),
où Z représente un radical divalent choisi dans le groupe constitué par les radicaux de formule 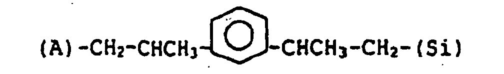 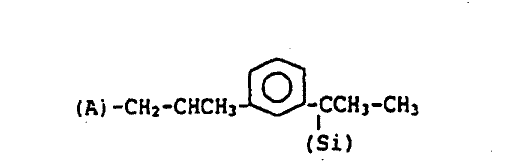 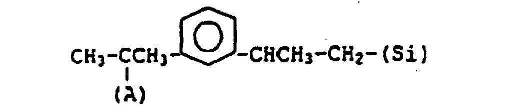 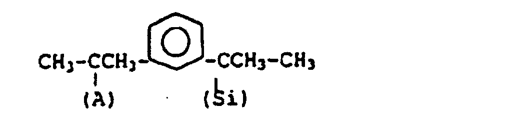 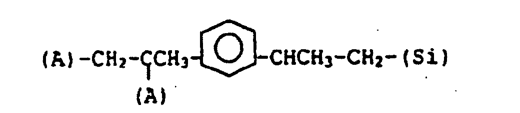 et 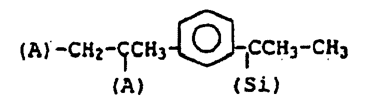 et Z' représente un radical monovalent de formule 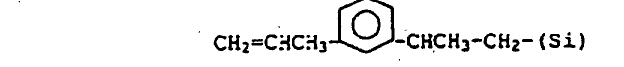 et/ou 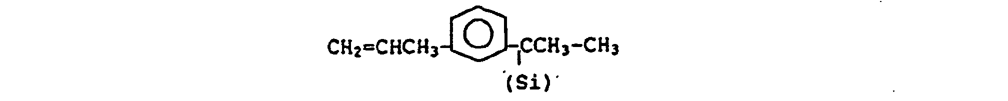 où (A) signifie une liaison avec le composant polymère à segments durs (A) et (Si)- une liaison avec l'atome de silicium dans (B),
à condition que dans la formule (I) au plus un radical G puisse être un radical Z'-, m représente un nombre entier de 1 à 1000 et n représente 0 ou un nombre entier de 1 à 20,
à condition que lorsque n n'est pas égal à 0, le produit de n et m doive répondre à 4≤n.m≤1000.

2. Copolymères thermoplastiques à blocs de silicone selon la revendication 1, **caractérisé en ce que** (A) est le polystyrène.

3. Copolymères thermoplastiques à blocs de silicone selon la revendication 1 ou 2, **caractérisé en ce qu'**il s'agit de copolymères de formule A-B-A, où A et B ont la signification indiquée dans la revendication 1.

4. Procédé pour la préparation des copolymères thermoplastiques à blocs de silicone selon la revendication 1, 2 ou 3, **caractérisé en ce qu'**on transforme le polymère à segments mous (B') de formule générale
Z'-[(SiR₂O)ₘSiR₂-X-]ₙ(SiR₂O)ₘSiR₂-Z' (I'),
où R, X, Z', n et m ont la signification indiquée dans la revendication 1, avec des monomères du composant polymère à segments durs (A) en présence d'initiateurs radicalaires dans une polymérisation par voie radicalaire.

5. Procédé selon la revendication 4, **caractérisé en ce qu'**on utilise comme monomère du composant polymère à segments durs (A) le styrène.

6. Utilisation des copolymères thermoplastiques à blocs de silicone selon la revendication 1, 2 ou 3 pour la préparation de revêtements anti-adhésifs.

7. Utilisation des copolymères thermoplastiques à blocs de silicone selon la revendication 1, 2 ou 3 dans des mélanges avec des polymères formant des films pour la préparation de revêtements ou de films anti-adhésifs.

## Claims

1. Thermoplastic silicone block copolymers comprising
(A) a hard segment polymer component selected from the group consisting of polystyrene, polymethyl methacrylate, polybutyl acrylate, polyacrylonitrile, vinyl copolymers, and copolymers of these polymers, and
(B) a soft segment polymer component of the general formula
G- [(SiR₂O)ₘSiR₂-X-]ₙ(SiR₂O)ₘSiR₂-G (I)
where each R can be identical or different and is a monovalent, optionally halogenated hydrocarbon radical having 1 to 18 carbon atoms per radical,
X is a divalent radical selected from the group consisting of the radicals of the formula 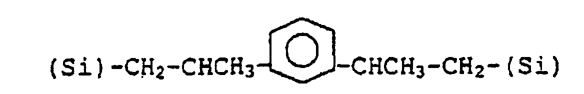 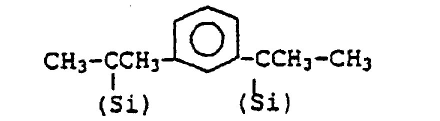 and 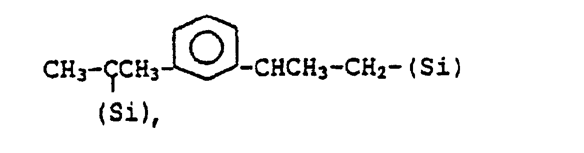 each G can be identical or different and is a radical (A)-Z-(Si) or Z'-(Si),
where Z is a divalent radical selected from the group consisting of radicals of the formula 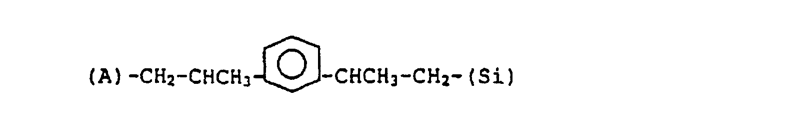 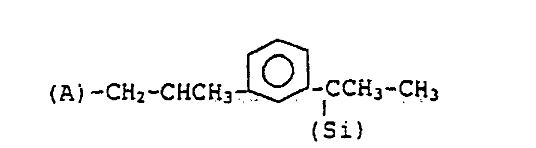 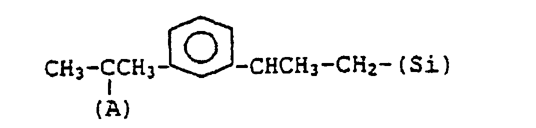 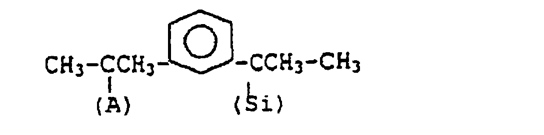 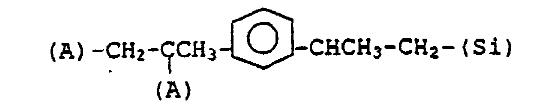 and 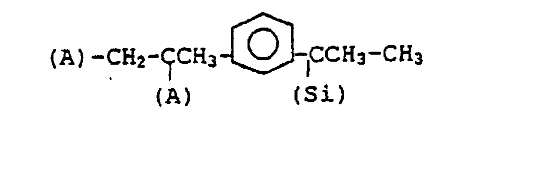 and Z' is a monovalent radical of the formula 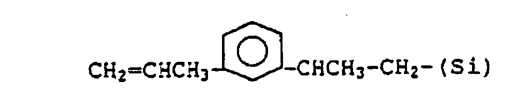 and/or 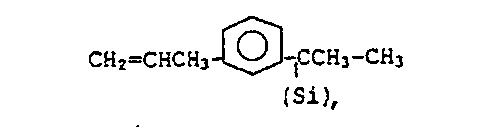 where (A)- is a bond to the hard segment polymer component (A) and (Si)- is a bond to the silicon atom in (B),
with the proviso that in the formula (I) not more than one radical G can be a radical Z'-,
m is an integer from 1 to 1000, and
n is 0 or an integer from 1 to 20,
with the proviso that if n is not 0 then for the product of n and m it is the case that 4≤n·m≤1000.

2. Thermoplastic silicone block copolymers according to Claim 1, **characterized in that** (A) is polystyrene.

3. Thermoplastic silicone block copolymers according to Claim 1 or 2, **characterized in that** they are of the formula A-B-A, with A and B being as defined in Claim 1.

4. Process for preparing the thermoplastic silicone block copolymers according to Claim 1, 2 or 3, **characterized in that** the soft segment polymer (B') of the general formula
Z'-[(SiR₂O)ₘSiR₂-X-]ₙ(SiR₂O)ₘSiR₂-Z' (I')
where R, X, Z', n, and m are as defined in Claim 1,
is reacted with monomers of the hard segment polymer component (A)
in the presence of free-radical initiators
in a free radical addition polymerization.

5. Process according to Claim 4, **characterized in that** the monomer of the hard segment polymer component (A) used is styrene.

6. Use of the thermoplastic silicone block copolymers according to Claim 1, 2 or 3 for producing abhesive coatings.

7. Use of the thermoplastic silicone block copolymers according to Claim 1, 2 or 3 in blends with film-forming polymers for producing abhesive coatings or films.
